# EUROPEAN PATENT APPLICATION

(11) **EP 1 207 459 A2**
(43) Date of publication of application: **22.05.2002**
(21) Application number: 01307916.5
(22) Date of filing: 18.09.2001
(51) Int. Cl.: G06F 17/00

(54) **Information retrieval and display**

(30) Priority: 09.11.2000 GB 0027314
(71) Applicant: NCR INTERNATIONAL INC., Dayton, Ohio 45479 (US)
(72) Inventor: Waller, Michael, London NW11 0DG (GB); Ward, Matthew Ashley, London W10 6JB (GB)
(74) Representative: Williamson, Brian

(57) **Abstract**

Interface methods for use in accessing information from a plurality of information suppliers comprise machine-reading a tag (28) carried by an item (52) and in response to data carried by the tag (28), either identifying an information resource address carried by the tag (28) and accessing the identified resource to download from that resource information aggregated from the plurality of information suppliers, or identifying a plurality of information resource addresses carried by the tag (28) and accessing the identified resources to download information from those resources.

## Description

This invention relates to information retrieval and display, and contemplates techniques for locating and loading information from resources such as the Internet and displaying the same for review and/or interaction.

The advance of information technology has placed information on almost any topic at the disposal of every suitably-equipped computer user. The Internet especially is undergoing explosive growth, with the result that new web pages and Internet-based services are proliferating in every field. Web pages can simply contain reference information but increasingly provide interactive facilities for the provision of information, entertainment and Internet-based services.

Whilst the expansion of the Internet has brought many benefits and has opened up some remarkable possibilities, it has also encountered the problem of information overload. There is now such a surfeit of information on so many topics that irrelevant information obscures the information an Internet user needs to know. Filtering this information adds to what, for many actual and potential users, is the already undesirable complexity of Internet access.

For example, a query presented through an Internet search engine can lead to an overwhelming flood of irrelevant hits that discourages those seeking a quick answer to a simple question. Advanced search options can be used to stem the flood, but they involve input of further, carefully considered search parameters, and are still somewhat hit-and-miss. The user has no convenient way to ensure, as far as possible, that the information immediately displayed will be precisely relevant to his or her needs at that time. To be relevant, such information could be the subject of whatever issue the user happens to be dealing with at that time, say a bank statement received in that day's mail, on which a query has arisen. Unfortunately, getting to such relevant information can be like finding a needle in a haystack. In particular, the global, borderless character of the Internet renders it ill-equipped readily to provide local information on demand.

Even if the URL of a desired web page is already known and has been bookmarked for relatively easy repetitive access, much irrelevant information can be presented by that web page to the user. Means exist to personalise a web page to the user's perceived needs by, for example, storing a cookie on the user's PC that identifies the user and his or her browsing habits to the server hosting the web page. However, the user's actual information needs can change from day to day or even from hour to hour and so will tend to outstrip any such personalisation techniques.

As just one example, a user might visit a web site one day for advice on how to fill in a particularly complex form such as a tax return. A day or two later, the same user might visit that site again for advice on how to fill in another form such as an appendix to the first form. Clearly, it would be more of a hindrance than a help on that second visit if the browser infers from recent experience that the user only wants information relating to the first form. In practice, therefore, the user is presented with a full menu of options on each and every visit, through which the user has to navigate to get to the advice that he or she seeks.

Unless the user's Internet-access terminal such as a PC is left on all the time and is connected to the Internet by a fast and expensive telecommunications link such as ISDN, Internet access requires the terminal to be booted up, following which a dial-up connection to the user's ISP has to be made and only then can the desired web page be searched for or entered. Thus, many laborious steps can lie between reading, say, a URL in a manufacturer's product brochure and successfully obtaining relevant information from the web site thus identified. Transcription errors often occur, or the URL could have changed since the brochure was printed.

Even when a user has reached the correct site, there could be layers of menus to be negotiated, possibly exacerbated by security measures, each involving download time in what has come to be known as the 'world wide wait'. It is therefore quite common for several minutes to elapse before the PC is actually ready to help the user with his or her query. This delay adds to the delays and difficulties already mentioned in terms of locating relevant information among the mass of irrelevant information with which the user can be presented. This further discourages the user from accessing the Internet resources from which he or she could benefit and, if the information requested is time-critical, can make the system too slow to be of practical use.

The problems outlined above are bad enough when the user only needs to access a single item of information, but become very much worse when the user needs to access several items of information. There are many circumstances in which users need items of information from different sources to deal with a particular event, experience or project, one example being moving house when the user might need information in parallel from advisers and representatives such as lawyers and estate agents, government departments such as the Land Registry, providers of services such as removals companies, and sellers of goods such as kitchen outfitters. At present, it can be impracticably difficult to use the Internet to locate and maintain contact with each and every one of those information sources.

Even if a user is disciplined enough to search for several items in a single browsing session, so incurring the delay of initial Internet access only once, each item demands a separate search operation with its own search strategy, and is likely to generate a long list of hits and possibly broken links that obscure what the user really needs to know. Thus, having already spent considerable preparatory time researching to develop a list of items to search for, there is every likelihood that the user will not persevere to obtain all of the information they need. There is a greater probability that the user will not remember to search for an item at all and so will miss out completely on potentially crucial information.

Whilst it is of course known to have a central web site for a given theme or topic at which the user can find links to several related information sources, it remains a matter of chance as to whether the user will reach that web site at all. Even if the user accesses the web site, the links could well have broken or otherwise gone out of date since they were listed.

The situation is equally unsatisfactory when viewed from the perspective of those who seek to provide information over the Internet to the user, for example to sell that user a service. They see potentially lucrative business passing them by, sometimes simply because the user's choice of search engine happens to present a competitor's link to the user before theirs. More generally, it is difficult and unrewarding for a supplier to foster the user's loyalty, to develop a coherent marketing strategy focused on the user, and to work in partnership with whatever other suppliers are necessary to satisfy the user's needs. Often, a group of suppliers working together will better serve a user than a similar group of suppliers working separately, especially if that group of suppliers has developed a good working relationship with each other.

Against this background, the Inventors have worked on the idea that the address of an information resource, notably a web address, can be coded onto a machine-readable tag associated with an item to which that information resource relates. This is the subject of the Applicant's co-pending European Patent Application Nos. [EP 00307530.6, EP 00307663.5 and EP00307654.4] the contents of which are incorporated herein by reference. The tag can be read automatically to identify and then access the information resource, thereby to extract and display truly relevant information but without putting the user to the trouble of searching for the information resource. For example, as soon as a coded web address is read from a tag by a suitable reader connected to a serial port of a PC or otherwise associated with a browsing apparatus, a browser can be launched to load and display a web page containing information relevant to the item associated with the tag. An application address optionally stored on the tag with the web address may be used to launch the browser application if desired.

In the present invention, the web page loaded by the browser contains information aggregated from a plurality of different information suppliers. In this way, the user can access a network of information suppliers relating to, for example, a project represented by a tagged item, simply by causing the tag to be read. It is also possible for the tagged item to give direct access to a plurality of information resources.

The item might be general merchandising material such as a brochure, an information sheet or an advertising leaflet. More generally, the item can be printed material of any type, such as a form. The item can even be a largely or wholly empty box or other package, this style of item emphasising the way in which the invention 'packages' information the user needs, albeit not in a physical form.

The invention therefore provides a link between items representing a group of related products or services, and their related web content.

Whilst the invention provides great benefit in the Internet environment and it is preferred that the or each information resource is an Internet or intranet resource addressable by a URL, it is not essential that the information resource is an Internet or intranet resource: information could be held in a database of any description.

In considering the physical form of the apparatus used to read a tag, the apparatus may be embodied as an item of furniture such as a table, which term encompasses other functionally-similar items of furniture such as counters and desks. These are all characterised by a support surface of some kind, which surface is usually generally horizontal. This presents the elegant and highly advantageous possibility of reading the tag on an item when that item is simply placed upon the support surface of the table. This is a remarkably natural, intuitive and convenient way of operating the reader to launch a browser and thereby load the web page appropriate to the item placed on the table.

The inventive concept can therefore be expressed in various ways. From one aspect, the invention resides in an interface method for use in accessing information from a plurality of information suppliers, the method comprising machine-reading a tag carried by an item and in response to data carried by the tag, identifying an information resource address carried by the tag and accessing the identified resource to download from that resource information aggregated from the plurality of information suppliers.

This aspect of the invention also embraces a method of advertising, marketing or disseminating information on behalf of a plurality of information suppliers, comprising providing a tagged item to a user having a tag reader, and in response to use of the tag reader to identify and access an information resource carried by the tag, downloading to the user from that resource information aggregated from the plurality of information suppliers. For example, the plurality of information suppliers may be providers of products or services to which the supplied information relates, and the tagged item may represent a theme to which the products or services relate.

The aspect of the invention extends to apparatus for accessing information from a plurality of information suppliers, the apparatus having a user interface comprising a display and control input means associated with the display and further including a tag reader for reading a tag associated with an item and means responsive to the tag reader for identifying an information resource address carried by the tag and accessing the identified resource to download from that resource information aggregated from the plurality of information suppliers.

Whilst any or all of the above components of the apparatus could be distributed around a plurality of interconnected units, those components are preferably integrated in a single appliance that can itself be embodied in an item of furniture such as a table. In any event, the tag reader is preferably operable to read a tag when the item is placed onto a support surface of the apparatus. The tag reader may be a reader/writer to allow data to be written to the tag.

The invention also embraces the related interface method for use in accessing information from a plurality of information resources, the method comprising machine-reading a tag carried by an item and in response to data carried by the tag, identifying a plurality of information resource addresses carried by the tag and accessing the identified resources to download information from those resources.

The invention can also be expressed in terms of a method of advertising, marketing or disseminating information on behalf of a plurality of information suppliers, comprising providing a tagged item to a user having a tag reader, and in response to use of the tag reader to identify and access a plurality of information resource addresses carried by the tag, at least one address for each of said plurality of information suppliers, downloading information to the user from the identified resource addresses.

The methods of the invention will generally further comprise displaying information relating to the item loaded from the accessed information resource, although the nature of that display is not essential within the broad inventive concept.

In method terms, the operation of reading the tag preferably takes place upon placing the item onto a support surface, and the further operations of the method follow on automatically from that initial operation so that those further operations, too, are ultimately triggered by placing the item onto the support surface. An element of manual control is, of course, possible if desired, such as manually enabling any of the operations of the method.

The invention also encompasses apparatus for accessing information from a plurality of information suppliers, the apparatus having a user interface comprising a display and control input means associated with the display and further including a tag reader for reading a tag associated with an item and means responsive to the tag reader for identifying a plurality of information resource addresses carried by the tag and accessing the identified resources to download information from those resources.

The ambit of the invention extends to a tagged item for use in the method or with the apparatus of the invention, and to a method of tagging such an item.

In the invention, a tag is seen as a discrete component that can be applied to or incorporated into an item, the tag thus having a distinct character from the item to which it is applied. For example, a tag code programmed into a memory storage device such as a CD-ROM would not be regarded as having a distinct character from that item, although like any product, a physical tag could be applied to such an item to obtain the benefits of the invention.

In its broadest sense, the invention contemplates a wide range of machine-readable, encoded tags that can be applied to or incorporated into an item. It would be possible, for example, to employ bar code technology. There is no cheaper machine-readable tag. However, bar codes suffer problems in integrity of read operations due to optical difficulties, particularly the need for line-of-sight presentation within a limited range of orientations with respect to the reader. More generally, bar code systems are prone to dirt build-up, ink bleeding, stray marks, dropouts and warping or tearing of the label or other substrate to which the bar code is applied. Bar coded information cannot be erased, rewritten or appended unless one replaces the bar code entirely, and bar codes can so easily be copied as to present no real barrier to counterfeit use or a security breach.

For these reasons, the Inventors envisage particular advantages for silicon-based ID tag technology, specifically RF tags (RFID) that solve or at least mitigate all of the above problems of bar codes. In RFID applications, a reader (which can be a reader/writer) generates an excitation field that serves as both the tag's source of power and its master clock. Thus activated when in range of the reader, the tag cyclically modulates its data contents and transmits them to a receiver circuit within the reader. The reader demodulates and decodes the data signal and provides a formatted data packet for further processing by a host computer.

Wireless programming is a particularly advantageous option offered by RFID read/write systems. It enables the memory in a tag to be configured, updated, erased, rewritten or appended by a suitable RF reader/writer at any time in the life of the tag or of the item with which the tag is associated. So, a tag can be programmed just before the associated item is given to the user, thus ensuring that the information it contains is up to date and appropriate to the user's needs at that time.

Whilst cross-platform RFID standards have not yet been developed, the Inventors especially favour RFID tags that embody the BiStatix technology announced by Motorola, Inc. in March 1999 through its subsidiary, Indala Corporation. The names BiStatix, Motorola and Indala are all acknowledged as trade marks.

Full particulars of BiStatix technology are currently available on Motorola's web site at *http:*//*www.motorola.com*/*GSS*/*SSTG*/*smartcard*/*3_0_bst_home.htm.* Briefly, BiStatix works on a capacitive coupling principle as opposed to the inductive principle of normal RFID systems. A BiStatix tag simply comprises a small, thin silicon chip, less than 3 mm² in surface area and less than 250 microns thick, attached to printed electrodes of, for example, carbon ink that serve as antennae for wireless communication between the chip and a suitable reader.

The chip and the electrodes are disposed on a substrate that can be flexible, for example on the reverse of a paper label whose opposite, exposed face can bear human-readable information, preferably in natural language, and possibly also bar-coded information for compatibility with an existing tag system. In this form, the BiStatix tag is flat and very thin, almost undetectably so. It is easy and cheap to make, and simple to apply to an item or to integrate with an existing item. This applies especially to an existing printed item like a form, ticket, token or information sheet because the BiStatix printing technique can simply be integrated with the existing printing process. The tag is tolerant of flexing, creasing and folding and is generally robust, even if the electrodes are torn or otherwise damaged: so long as an effective remnant of the electrodes remains attached to the silicon chip and the chip itself remains intact, the tag will remain functional.

Of course, it is also possible to apply the components of a BiStatix tag to a relatively stiff substrate such as a laminated ID card.

Whilst it is accepted that no silicon-based technology can compare strictly cost-wise with a bar code, a BiStatix tag comes close enough to a bar code in terms of cost that its technical benefits outweigh the additional cost while allowing use of the tags in high-volume, disposable applications. The BiStatix tag may therefore be considered as a next-generation bar code. Importantly for the purposes of the invention, BiStatix technology promises to provide sufficient memory capacity to store most if not all typical URLs. Present BiStatix tags are programmable with up to 120 ASCII characters, and greater capacity can be expected in future developments.

Accordingly, in conceptual terms, it is preferred that the tag technology used in the invention is RF and more preferably involves the use of a printed tag such as is offered by Motorola under the trade mark BiStatix.

In order that this invention can be more readily understood, reference will now be made, by way of example, to the accompanying drawings in which:
Figure 1 is a schematic perspective view of a prototype tag reader for use in the invention, embodied in a table;
Figure 2 is a block diagram showing the operation of the embodiment of Figure 1 in reading a tag, launching a browser and displaying information pertinent to the tag; and
Figure 3 is a block diagram showing a possible structure of the invention and how the tag reader of Figures 1 and 2 enables access to a network aggregation company.

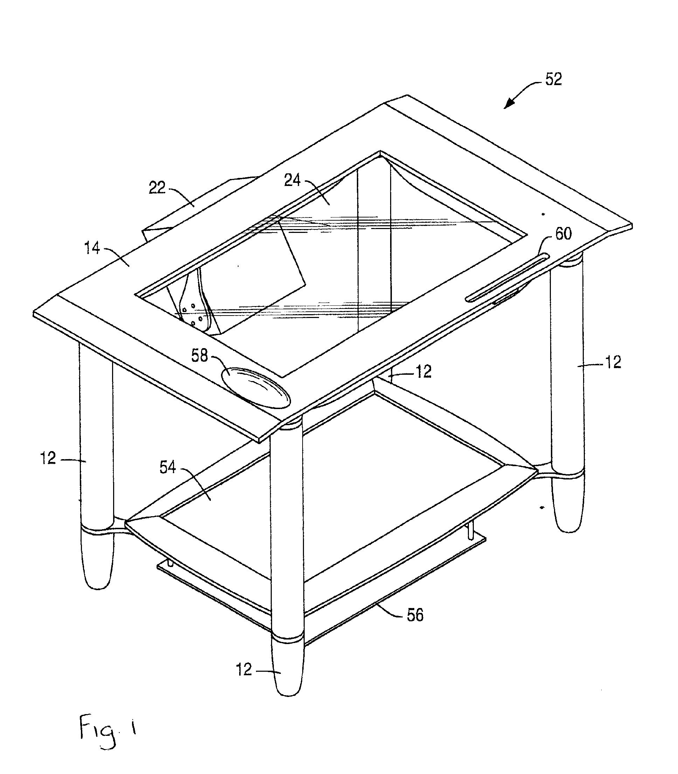

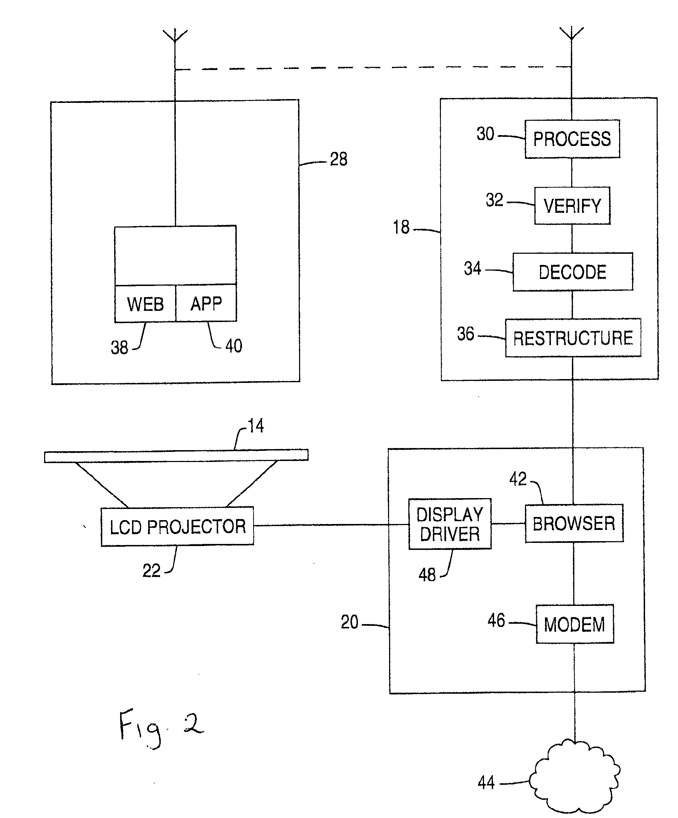

Referring firstly to Figures 1 and 2 of the drawings, tag-reader apparatus for use with the invention is embodied in the form of a table 10 suitable for use in a kitchen environment. The table 10 has legs 12 supporting an oblong glass top 14. The glass top 14 presents a scratch-resistant wipe-clean upper supporting surface capable of surviving the trials of kitchen life.

Situated in a protected position offset to one corner under the glass top 14 of the table 10, as designated by an elliptical marker 16, an excitation coil of a tag reader 18 provides outputs to a PC 20. The coil enables reading of tags of items placed on the table 10 on top of or near the elliptical marker 16. As aforementioned, the tag reader 18 could be a reader/writer, in which case the reader 18 will also take inputs from the PC 20.

The PC 20, in turn, drives an LCD projector 22 situated beside the table top 14 that projects downwardly onto a reflector 24 which in turn reflects the projected image back up to the underside of the table top 14 to generate the projected display 26, to be viewed from above by a user standing or sitting to one side of the table 10. The display image 26 occupies a portion of the table top 14 not occupied by the marker 16, so that neither the marker 16 representing the coil, nor a tagged item placed upon it, need obscure the display image 26.

The PC 20 is described as such for simplicity because it includes the essential PC elements such as a CPU, memory and I/O means (not shown), even though the external layout of a typical PC would not, in general, be adopted in a production apparatus.

When the tag reader 18 is on, as is envisaged will be the normal state of the table 10, the excitation coil generates an excitation field extending over at least part of the upper surface of the table 10 around the elliptical marker 16. A BiStatix tag 28 that is placed upon that part of the table 10 with its associated item comes within that excitation field and so its chip is powered up and activated to identify itself to the reader 18 via the printed electrodes that constitute tag antennae.

An antenna associated with the tag reader 18 and/or the excitation coil receives the electromagnetic emissions from the tag 28 antennae and converts them back into electrical form for detection and processing by receiving circuitry within the reader 18. Specific reference is made to Figure 2 at this point. Once the tag data has been processed at 30, the reader 18 firstly checks to verify at 32 that the signal received is valid and if it is valid, the data in the received signal is decoded at 34 and restructured at 36 into a format suitable for input to the PC 20. The data could, for example, be input through a serial port of the PC 20.

In this preferred embodiment, the identification data stored in tag 30 includes a web address 38 and an application address 40 so that, upon receiving the restructured data from the reader 18, the PC 20 launches a browser application 42 appropriate to the application address 40 and instructs that browser 42 to locate and load from the Internet 44 via a modem 46 a web page appropriate to the specified web address 38. Once the web page is loaded, a display driver 48 implemented within the PC 20 causes the LCD projector 22 to project the web page up onto the underside of the glass top 14, to be viewed by a user and optionally interacted with by means of e.g. a touch screen overlay (not shown) or other sensors.

The excitation field generated by the excitation coil extends over the upper surface of the table 10 at least within the perimeter of the coil as marked by the elliptical marker 16. Possibly, however, depending upon the configuration and power of the coil and the tag reader 18, the effective range of the excitation field will extend to the immediate environs of the table 10, so that merely bringing a tag-equipped item near to the table 10 will activate the projected display 24 as desired.

Before use, the table 10 is initially inactive or dormant, simply serving its function as furniture, but once the user brings the tagged item to or near the table, the table 10 reads the tag 30 and automatically links to the appropriate web site. To enable adequately fast response upon activation, it is preferred that the table 10 has a standby mode in which the display is off or in a screensaver mode but the PC 20 is fully operational. It is further preferred that the table is connected to the user's ISP by a fast, essentially 'always on' connection such as is allowed by an ISDN or optical cable telecommunications infrastructure. However, even if such a connection is not available, the invention will bring benefits by accessing relevant information immediately upon dialling in to the user's ISP.

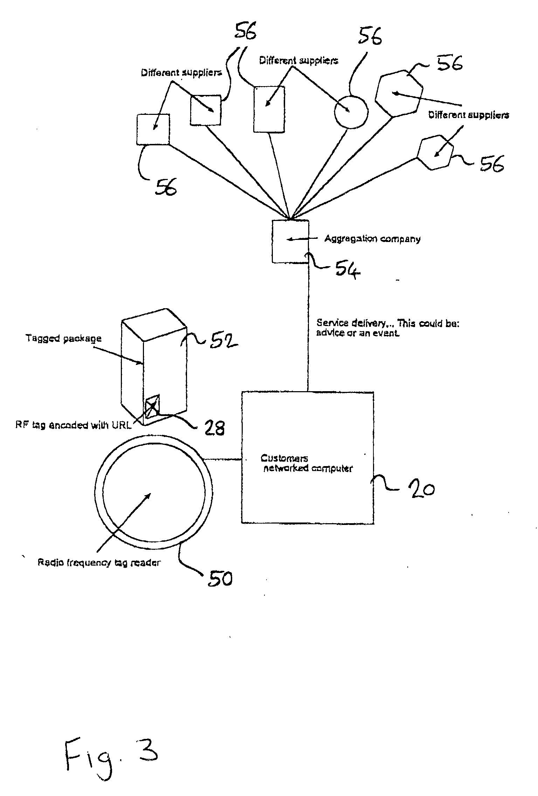

Referring now to Figure 3 of the drawings, like numerals are used for like parts and it will be noted that a coil 50 and its associated reader (not shown) respond to the BiStatix tag 28 of a tagged item 52, in this case a box, that is brought into the vicinity of the coil 50. The coil 50 and the reader are connected to a user's networked PC 20. Whilst the preceding description envisages the PC 20 being part of a tag-reading table 10, this is not essential if the display and interface capabilities of the PC 20 are used instead of those incorporated in the table 10. It will therefore be noted that, in Figure 3, the PC 20 is shown in isolation, taking input from the coil 50 in response to the presence of the BiStatix tag 28 on the tagged item 52 and accessing the URL of an information resource coded onto the tag 28. The PC 20 could alternatively be another kind of suitably-equipped Internet access terminal, such as a WAP-enabled mobile telephone, an Internet appliance and so on.

In Figure 3, the PC 20 is networked for connection via the Internet to a network aggregation company 54 whose URL is coded onto the tag 28. The network aggregation company 54, in turn, gathers information from an organised network of different suppliers 56 (services, events, venues, advice, etc...) and presents that information as a coherent package to the PC 20 via the Internet for display to and interactive input from the user.

It will be evident that the invention allows previously non-packagable experiences to be packaged. For instance, a 'start-up business in-a-box' could include appropriate legal documentation from a website of legal precedents, a day of legal advice accessible through the website of a law firm, an accountant for the first six months of trading accessible through the website of an accountancy practice and possibly also business study programmes accessed through the website of a business school.

Whilst separate suppliers would provide disparate elements of the 'package' presented to the user, those elements are all aggregated by one service in the form of the network aggregation company 54 and could be upgraded or tailored to the user from a basic model. This gives the user a ready-made network of services and suppliers that are brought together as a result of the tagged item 52 being brought within sensing range of the activated coil, whereupon the PC 20 or other networked device is connected to the network aggregation company 54 and the associated network services are accessed via the tag 28. The packaging 52 therefore holds an access code relating to the services needed.

The opportunities of expanding the Internet into physical brands and packaging offer the possibility to create objects and packaging that contain experiences or advice. Also, as a large number of events involve networks of different suppliers, the creation of physical objects that bring those suppliers together creates a coherent and powerful technology to enhance the relationship between suppliers and users.

As most events are time-specific, the 'packaged' experience, event or service has the advantage that its content can be kept up to date. It will be noted in this respect that none of the pertinent information is held in the package but instead it is all held on the network, where it can be updated frequently so as to be fully up to date when the user requests it.

The invention creates a new kind of product and hence a huge potential market.

It will be apparent that by means of the invention, the tagged item takes on a usefulness beyond any face value it may have: the facility for reading a tag on the item and for accessing a related information resource means that the item becomes the key to a wealth of useful information. This multiplies the effect of the advertising message and integrates the advertisers' virtual identity with their real-world marketing strategy, linking together their physical and virtual presence. Otherwise, this integration can prove difficult because, conventionally, web sites are enjoyed in a radically different context from a company's physical presence in terms of stores, products, service outlets and personnel.

The concept of the invention can be regarded more broadly as a marketing tool that allows a network of suppliers to pass on to a consumer a tagged object that is a physical symbol and a mnemonic of those suppliers, and that allows the consumer to connect to a web site co-ordinating and aggregating information provided by the suppliers.

The physical form of the object can be, for example, a plastics moulding that takes the form of a mascot or other symbol. It will also be apparent that although use with a table-like tag reading apparatus is preferred, this aspect of the invention does not require tag reading apparatus to be of any particular form. Nor does the tag have to be a BiStatix device or a bar code: other non-volatile memory devices such as an iButton (trade mark) produced by Dallas Semiconductors, Inc. can be used instead, being readable by a receiver connected to the serial port of a PC. It is also possible for cookies to be stored on the tag rather than on the user's PC.

Many variations are possible without departing from the inventive concepts. For example, the invention lends itself to marketing by mailing tagged letters or brochures to potential buyers of products or services as part of a project, who can then learn more about a proposed purchase or project simply by bringing the tagged item into range of a tag reader and viewing the resulting display. Optional interaction with the display can be employed if desired. Accordingly, reference should be made to the accompanying claims rather than the foregoing specific description in interpreting the scope of the invention.

## Claims

1. An interface method for use in accessing information from a plurality of information suppliers, the method comprising machine-reading a tag (28) carried by an item (52) and in response to data carried by the tag (28), identifying an information resource address carried by the tag (28) and accessing the identified resource to download from that resource information aggregated from the plurality of information suppliers.

2. An interface method for use in accessing information from a plurality of information resources, the method comprising machine-reading a tag (28) carried by an item (52) and in response to data carried by the tag (28), identifying a plurality of information resource addresses carried by the tag (28) and accessing the identified resources to download information from those resources.

3. The method of Claim 1 or Claim 2, wherein the operation of reading the tag (28) takes place upon placing the item (52) onto or into a support surface (14).

4. The method of Claim 3, comprising displaying the downloaded information on or beside the support surface (14).

5. A method of advertising, marketing or disseminating information on behalf of a plurality of information suppliers (56), comprising providing a tagged item (52) to a user having a tag reader (18), and in response to use of the tag reader (18) to identify and access an information resource (54) carried by the tag (30), downloading information to the user from that resource (54) aggregated from the plurality of information suppliers (56).

6. A method of advertising, marketing or disseminating information on behalf of a plurality of information suppliers (56), comprising providing a tagged item (52) to a user having a tag reader (18), and in response to use of the tag reader (18) to identify and access a plurality of information resource addresses carried by the tag (28), at least one address for each of said plurality of information suppliers (56), downloading information to the user from the identified resource addresses.

7. The method of Claim 5 or Claim 6, wherein the plurality of information suppliers are providers of products or services to which the supplied information relates, and wherein the tagged item represents a theme to which the products or services relate.

8. Apparatus (10) for accessing information from a plurality of information suppliers, the apparatus having a user interface comprising a display (26) and control input means associated with the display (26) and further including a tag reader (18) for reading a tag (28) associated with an item (52) and means responsive to the tag reader (18) for identifying an information resource address carried by the tag (28) and accessing the identified resource to download from that resource information aggregated from the plurality of information suppliers.

9. Apparatus (10) for accessing information from a plurality of information suppliers, the apparatus having a user interface comprising a display (26) and control input means associated with the display (26) and further including a tag reader (18) for reading a tag (28) associated with an item (52) and means responsive to the tag reader (18) for identifying a plurality of information resource addresses carried by the tag (28) and accessing the identified resources to download information from those resources.

10. The apparatus of Claim 8 or Claim 9, wherein the control input means is a touch screen overlaying the display (26).

11. The apparatus of any of Claims 8 to 10, wherein the tag reader (18) is a reader/writer capable of writing data to a tag (28).

12. The apparatus of any of Claims 8 to 11, further comprising a decoder (34) for identifying a coded information resource address (38) carried by a tag (28), and access means for accessing the identified information resource.

13. The apparatus of any of Claims 8 to 12, wherein the tag reader (18) is operable to read a tag (28) when a tagged item (52) is placed onto or into a support surface (14) of the apparatus (10).

14. The apparatus of Claim 13, wherein an excitation means of the tag reader (18) is disposed under the support surface (14).

15. The apparatus of Claim 13 or Claim 14, wherein the display (26) is presented by the support surface (14).

16. The apparatus of any of Claims 13 to 15, wherein the display (26) is projected and/or reflected upwardly from under the support surface (14).

17. The apparatus of any of Claims 13 to 16, wherein the support surface (14) has a reader portion (16) onto or into which a tagged item (52) can be placed to read its tag (28), and a display portion on which the display (26) can be presented.

18. The apparatus of Claim 17, wherein the support surface (14) is continuous between the reader portion and the display portion.

19. The apparatus of any of Claims 8 to 18, and being embodied in an item of furniture (10).

20. The apparatus of Claim 19, and being embodied in the form of a table (10).

21. A tagged item for use in the method or with the apparatus of any preceding Claim.

22. A method of tagging an item for use in the method or with the apparatus of any preceding Claim.

23. The method, apparatus or item of any preceding Claim, wherein the or each information resource is an Internet or intranet resource addressable by a URL.
